# EUROPÄISCHE PATENTSCHRIFT

(11) **EP 3 788 340 B1**
(45) Veröffentlichungstag und Bekanntmachung des Hinweises auf die Patenterteilung: **13.07.2022**
(21) Anmeldenummer: 19721615.3
(22) Anmeldetag: 02.05.2019
(51) Int. Cl.: G01M 3/20

(54) **VERFAHREN ZUM ERMITTELN DER RELATIVEN LAGE EINES GASLECKS**
METHOD FOR DETERMINING THE RELATIVE POSITION OF A GAS LEAK
PROCÉDÉ PERMETTANT DE DÉTERMINER LA POSITION RELATIVE D'UNE FUITE DE GAZ

(30) Priorität: 04.05.2018 DE 102018206877
(43) Veröffentlichungstag der Anmeldung: 10.03.2021
(73) Patentinhaber: Inficon GmbH, 50968 Köln (DE)
(72) Erfinder: RUTH, Marcel, 50968 Köln (DE); WETZIG, Daniel, 50968 Köln (DE)
(74) Vertreter: dompatent von Kreisler Selting Werner - Partnerschaft von Patent- und Rechtsanwälten mbB
(86) Internationale Anmeldenummer: PCT/EP2019/061245
(87) Internationale Veröffentlichungsnummer: WO 2019/211378

(56) Entgegenhaltungen:
- US-A1- 2004 051 043
- US-A1- 2004 194 533
- US-A1- 2009 288 477
- US-A1- 2010 326 169

## Beschreibung

Die Erfindung betrifft ein Verfahren zum Ermitteln der relativen räumlichen Lage oder Richtung eines Gaslecks in Bezug auf einen Schnüffellecksucher.

Die Schnüffellecksuche ist als Verfahren zur Gasdetektion beispielsweise in WO 02/48686 A2 beschrieben. Schnüffellecksucher weisen typischerweise einen Prüfgaseinlass auf, durch den das zu analysierende Gas (Prüfgas) angesaugt wird, sowie einen Referenzgaseinlass, durch den ein Gas aus der umgebenden Atmosphäre als Referenzgas zum Vergleich angesaugt wird. Zum Ansaugen des Gases dient typischerweise eine Vakuumpumpe des Schnüffellecksuchers.

WO 02/48686 A2 und WO 2009/098302 A1 beschreiben einen Prüfgaseinlass und einen Referenzgaseinlass, die beide an dem distalen Ende der Schnüffelspitze der Schnüffelsonde angeordnet sind. Die Schnüffelspitze ist dabei Bestandteil eines handgeführten Geräts (Handstück).

Ein Gasmodulationsventil verbindet den Prüfgaseinlass und den Referenzgaseinlass mit dem Gasanalysator. Der Prüfgaseinlass ist über eine Prüfgasleitung mit dem Gasmodulationsventil verbunden. Der Referenzgaseinlass ist über eine Referenzgasleitung mit dem Gasmodulationsventil verbunden. Das Gasmodulationsventil ist gasleitend mit dem Gasanalysator verbunden. Das Gasmodulationsventil ist ein Schaltventil, welches zwischen der Prüfgasleitung und der Referenzgasleitung hin- und herschaltet und dabei abwechselnd jeweils entweder den Prüfgaseinlass oder den Referenzgaseinlass mit dem Gasanalysator verbindet. Dadurch wird der Gasanalysator abwechselnd mit dem durch den Prüfgaseinlass und dem durch den Referenzgaseinlass angesaugten Gas versorgt, je nach Schaltzustand des Gasmodulationsventils.

In WO 02/48686 A2 handelt es sich bei dem Gasanalysator um einen Infrarotgasanalysator mit einer Prüfküvette, die einen Einlass aufweist, durch den das zu analysierende Gas angesaugt wird. Durch einen Auslass der Prüfküvette wird das Gas wieder ausgestoßen. Eine Infrarotlichtquelle sendet Infrarotstrahlung aus, die die Prüfküvette durchläuft und an deren gegenüberliegendem Ende von einem Infrarotdetektor aufgenommen wird.

Schnüffellecksucher der oben beschriebenen Art sind typischerweise dazu ausgebildet, eine hohe Sensitivität zu erreichen. Das Schalten zwischen dem Prüfgaseinlass und dem Referenzgaseinlass erfolgt mit dem Zweck, die in der umgebenden Atmosphäre enthaltene Menge an Testgas oder Störgas aus dem Messsignal des Prüfgases herauszurechnen. Das Testgas ist dabei das in der analysierten Gasmenge zu identifizierende Gas, das heißt zum Beispiel ein durch ein Leck austretendes und zu detektierendes Gas.

In der Schnüffelecksuche ist jedoch nicht nur eine hohe Sensitivität bei der Gasanalyse erstrebenswert, um geringe Testgasmengen in dem analysierten Gas zu erkennen. Vielmehr ist es oftmals auch erstrebenswert, eine schnelle Orientierung innerhalb eines großen Bereichs zu ermöglichen, indem ein Leck vermutet wird. Dies ist mit der herkömmlichen Signalanalyse durch Steigerung der Sensitivität nicht möglich.

Zur Lokalisierung von Undichtigkeiten werden in der industriellen Dichtheitsprüfung häufig Schnüffelsonden eingesetzt, welche die Luft ansaugen und durch ein Nachweissystem leiten. Hierbei gibt es Geräte, bei denen der am Messeinlass eingesaugte Luftstrom kontinuierlich durch das Nachweissystem geleitet wird und Geräte bei denen der Luftstrom durch ein Ventil zwischen zwei unterschiedlichen Einlässen hin und her gewechselt wird. Letzteres ermöglicht den ständigen Vergleich der Konzentrationen der Gasgemische an den entsprechenden Einlassöffungen. Das Leckratensignal wird dann durch die Differenzbildung des Signals vom Prüfgaseinlass- und vom Referenzgaseinlas gebildet. Diese Methode wird als Gaswechselmodulation bezeichnet. Tritt nun aus einem undichten, mit Gas beaufschlagten Prüfling Prüfgas aus, das von der Messsonde eingesogen wird, so erzeugt es ein von der Konzentration des Luft-Prüfgasgemisches abhängiges Messsignal. Ist die Konzentration dieses Gemisches bei der Gaswechselmodulation in beiden Gasströmen identisch, so wird keine Leckagerate gemessen.

US 2004/0051043 A1 beschreibt einen Gasdetektor zur Schnüffelllecksuche mit einem Infrarotgasanalysator und einem Prüfgaseinlass und einem Referenzgaseinlass.

US 2010/0326169 A1 beschreibt einen Schnüffellecksucher der an der Schnüffelspitz einen Prüfgaseinlass und einen Referenzgaseinlass aufweist.

Vor diesem Hintergrund liegt der Erfindung die Aufgabe zugrunde, ein Verfahren zur schnellen Ermittlung der räumlichen Richtung eines Gaslecks in Bezug auf einen handgeführten Schnüffellecksucher zu schaffen.

Das erfindungsgemäße Verfahren wird definiert durch Patentanspruch 1.

Demnach werden zum Ermitteln der relativen Richtung eines Gaslecks in Bezug auf einen Schnüffellecksucher die folgenden Schritte ausgeführt:
a) Zuführen von durch den Prüfgaseinlass (12) angesaugtem Gas zu dem Gasanalysator (16),
b) Bestimmen der Testgaskonzentration in dem dem Gasanalysator (16) zugeführten Gas,
c) Umschalten des Schaltventils (20),
d) Zuführen von durch den Referenzgaseinlass (14) angesaugtem Gas zu dem Gasanalysator (16),
e) Analysieren der Testgaskonzentration in dem dem Gasanalysator (16) zugeführten Gas,
f) Bilden eines Differenzsignals aus der Differenz der gemäß Schritt b) bestimmten Testgaskonzentration und der gemäß Schritt e) bestimmten Testgaskonzentration,
g) Verändern der räumlichen Ausrichtung des Handstücks,
h) Wiederholen der Schritte a) - f),
i) Ermitteln, ob sich das Differenzsignal nach Schritt h) gegenüber dem

Differenzsignal gemäß f) verändert hat,
j) Schließen auf die relative Richtung eines zu ortenden Gaslecks in Bezug auf die Ausrichtung des Handstücks anhand der Veränderung des Differenzsignals.

Vorzugsweise werden die Schritte a) - e) solange wiederholt, bis das Differenzsignal minimal oder maximal ist. Wenn die Differenz aus Testgaskonzentration in dem durch den Prüfgaseinlass angesaugten Gas und aus der Testgaskonzentration in dem durch den Referenzgaseinlass angesaugten Gas ungefähr Null ist, sind die Abstände vom Prüfgaseinlass zum Leck und vom Referenzgaseinlass zum Leck nahezu gleich. Bei maximalem Differenzsignal ist der Abstand vom Prüfgaseinlass zum Leck besonders gering im Vergleich zu dem Abstand des Referenzgaseinlasses zum Leck. Wenn der Prüfgaseinlass am vorderen, distalen Ende der Schnüffelspitze angeordnet ist und der Referenzgaseinlass am rückwertigen Ende des Handstücks, weist die Schnüffelspitze bei maximalem Differenzsignal in Richtung auf das Gasleck und bei minimalem Differenzsignal vom Gasleck fort.

Vorzugsweise sollte die räumliche Ausrichtung der Schnüffelsonde zwischen dem Ausführen des Schritts a) und dem Ausführen des Schritts d) nicht verändert werden, um die jeweiligen Abstände des Prüfgaseinlasses und des Referenzgaseinlasses zum Leck nicht zu verändern.

Anhand einer Änderung des Differenzsignals wird erfindungsgemäß auf die relative Richtung des zu lokalisierenden Lecks in Bezug auf das Handstück geschlossen .

Insbesondere kann auch die Ausrichtung des Handstücks als Hinweis auf die relative Lage oder Richtung des zu lokalisierenden Lecks in Bezug auf das Handstück ausgewertet werden, wenn das Differenzsignal maximal oder minimal ist. Wenn beispielsweise der Prüfgaseinlass an der Schnüffelspitze und der Referenzgaseinlass am rückwärtigen Ende des Handstücks angeordnet ist, zeigt die Schnüffelspitze, wie oben beschrieben, bei maximalem Differenzsignal in Richtung auf das Leck. Bei minimalem Differenzsignal weist die Schnüffelspitze dann in entgegengesetzter Richtung von dem Leck fort, während das rückwärtige Ende des Handstücks dem Leck zugewandt ist.

Erfindungsgemäß wird also die Testgasmenge in dem Prüfgas verglichen mit der Testgasmenge in dem Referenzgas. Durch Differenzbildung aus diesen beiden Signalen und Überwachen der Veränderung des Differenzsignals, während die räumliche Ausrichtung des Schnüffellecksuchers oder des Handstücks verändert wird, ist es möglich, die räumliche Lage bzw. Richtung des Lecks in Bezug auf die Ausrichtung des Handstücks bzw. des Schnüffellecksuchers zu erfassen. Wenn nämlich das Differenzsignal maximal oder minimal ist, kann angenommen werden, dass das Handstück in Richtung auf das Leck bzw. von diesem fortweist bzw. auf einer den Prüfgaseinlass und den Referenzgaseinlass enthaltenden geometrischen Achse liegt.

Beim Verändern der räumlichen Ausrichtung des Handstücks gemäß Verfahrensschritt g) sollte die Position des Handstücks und insbesondere die Entfernung zwischen dem Handstück und dem zu ortenden Leck nicht oder nur vernachlässigbar im Vergleich zur Veränderung der räumlichen Ausrichtung des Handstücks verändert werden. Mit "räumliche Ausrichtung" ist die Raumrichtung gemeint, in die das Handstück weist oder in der eine durch den Prüfgaseinlass und durch den Referenzgaseinlass hindurch verlaufende geometrische Achse ausgerichtet ist.

Durch eine ausreichend große räumliche Trennung des Mess- und des Referenzgas-Einlasses (mindestens 10cm, besser 50cm, vorzugsweise 100cm) wird das Differenzsignal, das dem Kältemittelgradienten in der Messzelle entspricht derart vergrößert, dass eine grobe Ortung der Leckage in den Kältemittelwolken mittels Gaswechselmodulation und Beobachtung des Differenzsignals bei Bewegung im Raum ermöglicht wird. Hierfür bietet es sich an, den Messgas-Einlass an die Spitze eines Schwanenhalses zu legen und den Referenzgaseinlass am unteren Teil des Handgriffes zu positionieren. Durch die relative Messung mit ausreichend großem Einlassabstand lässt sich bereits durch einfache Drehung des Gerätes der Konzentrationsgradient (Differenzsignal) erfassen und so die grobe Richtung bestimmen, wodurch der Anwender noch schneller zur Quelle der Kältemittelwolke geführt werden kann. Negative Differenzsignale deuten dabei darauf hin, dass das Leck dem Gerät rückseitig zugewandt liegt. Die Umschaltfrequenz zwischen Mess-und Referenzgas sollte ausreichend hoch sein, um die Bewegung des Lecksuchers und die Bewegung der Kältemittelwolken im Raum abzubilden (mind. 1Hz, besser 10Hz, vorzugsweise ca. 100Hz).

Die Vorortung im Raum kann durch Anzeige und Beobachtung eines numerischen oder graphischen Differenzsignals durch den Anwender erfolgen. Über die Darstellung des zeitlichen, mit der Bewegung des Lecksuchers korrelierenden Verlaufes, wird die Ortung weiter vereinfacht. Mit Hilfe von Lagesensoren kann eine Software den Anwender bei der Analyse der Lage der Kältemittelwolken noch weiter unterstützen und direkt die erwartete Richtung der Leckagequelle anzeigen.

Nach erfolgreicher Ermittlung der Anlage mit der Leckage, in deren Nähe als Quelle der Kältemittelwolke die Kältemittelkonzentration am höchsten ist, kann an jener anschließend die undichte Stelle lokalisiert werden. Dazu wird das Ventil in Messgasstellung gehalten und somit in den bewährten kontinuierlichen Lokalisierungsmodus ohne Gaswechselmodulation gewechselt.

Wenn das ermittelte Differenzsignal ungefähr, das heißt nahe oder gleich, null ist, wird das zu lokalisierende Leck als auf einer geometrischen Achse angeordnet angenommen, die quer zu einer den Prüfgaseinlass und den Referenzgaseinlass enthaltenden Achse verläuft. Das zu lokalisierende Leck liegt dann also querab zu dem Schnüffellecksucher.

Ergänzend ist denkbar, einen Lagesensor und/oder einen Beschleunigungssensor zu verwenden, um die Lage des Schnüffellecksuchers zu erfassen und bei der Ermittlung der relativen Lage oder Richtung des zu ortenden Lecks zu berücksichtigen. Hierzu kann der zeitliche Verlauf der Lage/Richtung des Schnüffellecksuchers oder der Lage-/Richtungsänderung aufgezeichnet und mit dem ermittelten Differenzsignal in Korrelation gebracht werden. Denkbar ist ferner, das Differenzsignal oder dessen Veränderung dem Benutzer des Schnüffellecksuchers anzugeben. Beispielsweise kann das Signal oder dessen Änderung auf einem Display dargestellt und/oder akustisch wiedergegeben werden.

Im Folgenden werden anhand der Figuren Ausführungsbeispiele der Erfindung näher erläutert. Es zeigen:
Fig. 1 ein erstes Ausführungsbeispiel und
Fig. 2 ein zweites Ausführungsbeispiel.

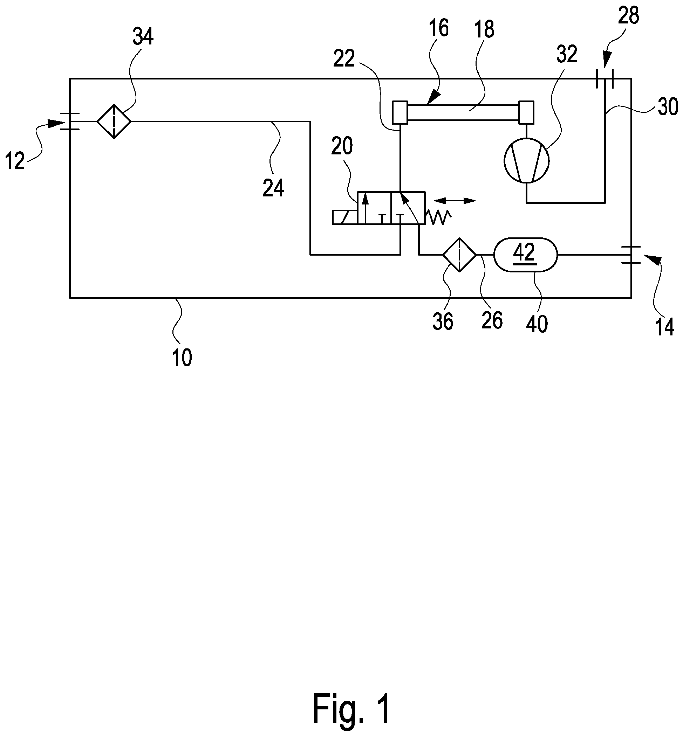

Bei dem Ausführungsbeispiel in Fig. 1 weist der Schnüffellecksucher einen Prüfgaseinlass 12 und einen Referenzgaseinlass 14 auf. Der hier verwendete Gasanalysator ist ein Infrarotabsorptionsanalysator mit einer Absorptionsküvette 18.

Der Schnüffelleckdetektor 10 weist ferner ein Schaltventil 20 auf, welches mit dem Gasanalysator 16, also der Küvette 18 über eine erste Leitung 22 verbunden ist. Der Prüfgaseinlass 12 ist mit dem Schaltventil über eine Prüfgasleitung 24 verbunden. Der Referenzgaseinlass 14 ist mit dem Schaltventil 20 über eine Referenzgasleitung 26 verbunden. Das Schaltventil 20 ist dazu ausgebildet, abwechselnd hin und her zwischen dem Referenzgaseinlass 14 und dem Prüfgaseinlass 12 zu schalten, indem entweder die Prüfgasleitung 24 oder die Referenzgasleitung 26 mit der ersten Leitung 22 und dadurch mit dem Gasanalysator 16 verbunden wird. Dadurch wird dem Gasanalysator 16 entweder das durch den Prüfgaseinlass 12 oder das durch den Referenzgaseinlass 14 angesaugte Gas über das Schaltventil 20 zur Analyse zugeführt. Die Absorptionsküvette 18 des Gasanalysators 16 ist mit dem Gasauslass 28 des Schnüffelleckdetektors 10 über eine zweite Leitung 30 verbunden, die eine Gasförderpumpe 32 aufweist. Die Gaspumpe 32 ist zum Erzeugen eines kontinuierlichen Gasstroms ausgebildet.

Die Prüfgasleitung 24 enthält ein Prüfgasfilter 34. Die Prüfgasleitung 26 enthält ein Referenzgasfilter 36.

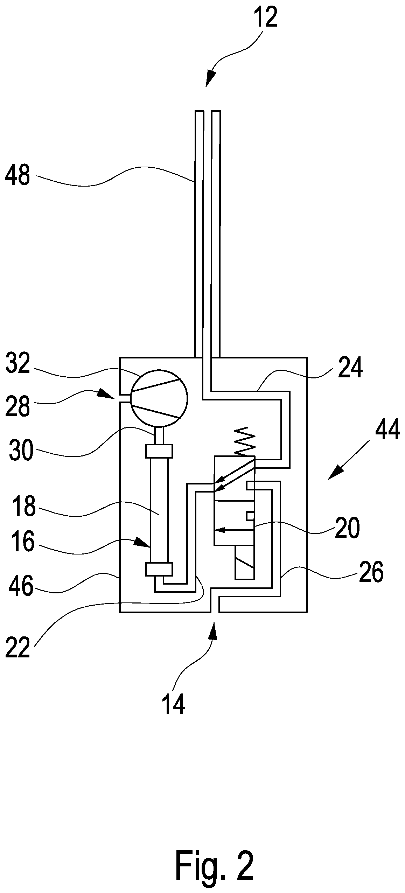

In dem in Fig. 2 dargestellten Ausführungsbeispiel weist der Schnüffellecksucher ein handgeführtes Gerät 44 mit einem Gehäuse 46 auf, welches dimensioniert ist, um von einem Bediener des Schnüffellecksuchers 10 gehalten und geführt zu werden. Das Gehäuse 46 umschließt das Schaltventil 20, den Gasanalysator 16 mit der Absorptionsküvette 18 und die Gaspumpe 32, sowie die Prüfgasleitung 24, die Referenzgasleitung 26, die erste Leitung 22 und die zweite Leitung 30. Der Referenzgaseinlass 14 und der Gasauslass 28 sind durch Öffnungen in dem Gehäuse 46 geformt.

Das Handstück 44 weist eine langgestreckte Schnüffelsonde 48 auf, an deren distalem Ende der Prüfgaseinlass 12 angeordnet ist. Die Prüfgasleitung 24 erstreckt sich von dem Prüfgaseinlass 12 durch die Schnüffelsonde 48 und in das Innere des Gehäuses 46. Das proximale Ende der Schnüffelsonde 48 ist lösbar mit dem Gehäuse 46 verbunden.

Während der Prüfgaseinlass 12 am vordersten, distalen Ende der Schnüffelsonde 48 angeordnet ist, ist der Referenzgaseinlass 14 am hintersten, proximalen Ende des Gehäuses 46 des Handstücks 44 angeordnet, damit die Entfernung zwischen dem Prüfgaseinlass 12 und dem Referenzgaseinlass 14 möglichst groß ist. Der Gasauslass 28 ist auf einer Seite des Gehäuses in einem distalen Endbereich davon ausgebildet, sodass die Entfernung zwischen dem Gasauslass 28 und dem Referenzgaseinlass 14 und die Entfernung zwischen dem Gasauslass 28 und dem Prüfgaseinlass 12 möglichst gleich und maximal sind.

Während ein Bediener das Handstück 44 hält und durch einen Raum führt, das heißt also die räumliche Ausrichtung des Handstücks und dabei erfindungsgemäß die relative Richtung eines zu ortenden Lecks in Bezug auf die Ausrichtung des Handstücks verändert, wird das Schaltventil 20 mit konstanter Frequenz von ca. 10 Hz hin- und hergeschaltet, sodass kurze Gaspulse des durch den Prüfgaseinlass 12 und durch den Referenzgaseinlass 14 angesaugten Gases abwechselnd und nacheinander dem Gasanalysator 16 zugeführt werden. Die Schaltfrequenz des Schaltventils 20 ist dabei so hoch gewählt (ca. 8 - 12 Hz), dass die Veränderung der räumlichen Ausrichtung des Handstücks 44 beim Ansaugen von Gas durch den Prüfgaseinlass 12 und beim nachfolgenden Ansaugen durch den Referenzgaseinlass 14 die Testgaskonzentration in dem angesaugten Gas nicht oder nur vernachlässigbar verändert. Alternativ ist es möglich, die räumliche Ausrichtung des Handstücks 44 während des Ansaugens durch den Prüfgaseinlass 12 und während des nachfolgenden Ansaugens durch den Referenzgaseinlass 14 nicht zu verändern und erst für die dann nachfolgende erneute Messung durch den Prüfgaseinlass 12 zu verändern.

Bei dem vorliegend betrachteten Ausführungsbeispiel handelt es sich bei dem zu ortenden Leck um ein Leck in einer Kältemittelanlage. Durch das Leck tritt gasförmiges Kältemittel aus und bildet eine Kältemittelwolke.

Bei der Gaswechselmodulation wird durch Differenzbildung zwischen dem Messund einem Referenzsignal der Konzentrationsunterschied zwischen zwei Messöffungen bestimmt. Durch ausreichend große räumliche Trennung des Mess/Prüf- und des Referenzgas-Einlasses wird der Kältemittelgradient in der Messzelle derart vergrößert, dass eine grobe Ortung der Leckage in den Kältemittelwolken mittels Gaswechselmodulation und Beobachtung des Differenzsignals bei Bewegung des Leckdetektors im Raum ermöglicht wird.

Hierfür bietet es sich an, den Prüfgaseinlass 12 an die Spitze eines Schwanenhalses zu legen und den Referenzgaseinlass 14 am unteren Teil des Handgriffes zu positionieren.

Durch die relative Messung mit ausreichend großem Einlassabstand zwischen Prüfgas- und Referenzgaseinlass lässt sich bereits durch einfache Drehung des Gerätes der Konzentrationsgradient erfassen und so die grobe Richtung bestimmen, wodurch der Anwender noch schneller zur Quelle der Kältemittelwolke geführt werden kann. Negative Differenzsignale deuten dabei darauf hin, dass das Leck dem Gerät rückseitig zugewandt liegt.

Nach der, mit diesem Verfahren erfolgreichen, Ermittlung der undichten Anlage, in deren Nähe als Quelle der Kältemittelwolke die Kältemittelkonzentration am höchsten ist, kann an jener anschließend die undichte Stelle lokalisiert werden. Dazu wird das Ventil in Messgasstellung gehalten, in welcher der Prüfgaseinlass 12 mit dem Gasanalysator 16 verbunden ist, und somit in den bewährten kontinuierlichen Lokalisierungsmodus ohne Gaswechselmodulation gewechselt.

## Patentansprüche

1. Verfahren zum Ermitteln der relativen Richtung eines Gaslecks in Bezug auf einen Schnüffellecksucher (10), der
ein Handstück (44) mit einer Schnüffelsonde mit einem Prüfgaseinlass (12),
einen an dem Handstück entfernt von dem Prüfgaseinlass (12) angeordneten Referenzgaseinlass (14),
einen Gasanalysator (16) und
ein Schaltventil (20) aufweist,
wobei das Schaltventil (20) zum abwechselnden Verbinden des Prüfgaseinlasses (12) mit dem Gasanalysator (16) und des Referenzgaseinlasses (14) mit dem Gasanalysator (16) in gasleitender Weise ausgebildet ist, sodass entweder das durch den Prüfgaseinlass (12) angesaugte Gas oder das durch den Referenzgaseinlass (14) angesaugte Gas von dem Gasanalysator (16) analysiert wird, mit den Schritten:
a) Zuführen von durch den Prüfgaseinlass (12) angesaugtem Gas zu dem Gasanalysator (16),
b) Bestimmen der Testgaskonzentration in dem dem Gasanalysator (16) zugeführten Gas,
c) Umschalten des Schaltventils (20),
d) Zuführen von durch den Referenzgaseinlass (14) angesaugtem Gas zu dem Gasanalysator (16),
e) Analysieren der Testgaskonzentration in dem dem Gasanalysator (16) zugeführten Gas,
f) Bilden eines Differenzsignals aus der Differenz der gemäß Schritt b) bestimmten Testgaskonzentration und der gemäß Schritt e) bestimmten Testgaskonzentration,
**gekennzeichnet durch** die Schritte
g) Verändern der räumlichen Ausrichtung des Handstücks,
h) Wiederholen der Schritte a) - f),
i) Ermitteln, ob sich das Differenzsignal nach Schritt h) gegenüber dem Differenzsignal gemäß f) verändert hat,
j) Schließen auf die relative Richtung eines zu ortenden Gaslecks in Bezug auf die Ausrichtung des Handstücks anhand der Veränderung des Differenzsignals.

2. Verfahren nach Anspruch 1 , **dadurch gekennzeichnet, dass** während Schritt g) die Position des Handstücks nicht verändert wird.

3. Verfahren nach einem der vorhergehenden Ansprüche, **dadurch gekennzeichnet, dass** die Schritte a) - i) so lange wiederholt werden, bis das Differenzsignal minimal oder maximal ist.

4. Verfahren nach einem der vorhergehenden Ansprüche, **dadurch gekennzeichnet, dass** die räumliche Ausrichtung der Schnüffelsonde zwischen dem Ausführen des Schritts a) und dem Ausführen des Schritts d) nicht verändert wird.

5. Verfahren nach einem der vorhergehenden Ansprüche, **dadurch gekennzeichnet, dass** das Umschalten des Schaltventils 20 gemäß Schritt c) während des Ausführens der Schritte a) - i) mit einer Umschaltfrequenz von mindestens einem Hertz und vorzugsweise etwa 10 Hz - 100 Hz erfolgt.

6. Verfahren nach einem der vorhergehenden Ansprüche, **dadurch gekennzeichnet, dass** die Ausrichtung des Handstücks als Hinweis auf die relative Lage des zu lokalisierenden Lecks ausgewertet wird, wenn das Differenzsignal maximal oder minimal ist.

7. Verfahren nach einem der vorhergehenden Ansprüche, **dadurch gekennzeichnet, dass** ein zu lokalisierendes Leck als auf einer geometrischen Achse angeordnet angenommen wird, die durch den Prüfgaseinlass (12) und durch den Referenzgaseinlass (14) hindurch verläuft, wenn das Differenzsignal maximal oder minimal ist.

8. Verfahren nach einem der vorhergehenden Ansprüche, **dadurch gekennzeichnet, dass** ein zu lokalisierendes Leck als auf einer geometrischen Achse angeordnet angenommen wird, die quer zu einer den Prüfgaseinlass (12) und den Referenzgaseinlass (14) enthaltenden Achse verläuft, wenn das Differenzsignal nahe oder gleich null ist.

9. Verfahren nach einem der vorhergehenden Ansprüche, **dadurch gekennzeichnet, dass** mit Hilfe eines Lagesensors und/oder eines Beschleunigungssensors die Lage und/oder eine Veränderung der Lage des Schnüffellecksuchers erfasst und bei der Bestimmung der Lage des Lecks berücksichtigt wird.

10. Verfahren nach einem der vorhergehenden Ansprüche, **dadurch gekennzeichnet, dass** die Lage des Schnüffellecksuchers (10) erfasst und deren zeitlicher Verlauf während des Ausführens mindestens einer der Schritte a) - i) aufgezeichnet und mit dem ermittelten Differenzsignal korreliert wird.

11. Verfahren nach einem der vorhergehenden Ansprüche, **dadurch gekennzeichnet, dass** das Differenzsignal und/oder dessen Veränderung während des Ausführens mindestens einer der Schritte a) - i) dem Benutzer des Schnüffellecksuchers (10) angegeben werden.

## Claims

1. A method for determining the relative orientation of a gas leak relative to a sniffer leak detector (10) which comprises
a handpiece (44) with a sniffer probe having a test gas inlet (12),
a reference gas inlet (14) disposed at the handpiece remote from the test gas inlet (12),
a gas analyzer (16), and
a switching valve (20),
wherein the switching valve (20) is configured to alternately connect the test gas inlet (12) with the gas analyzer (16) and the reference gas inlet (14) with the gas analyzer (16) in a gas conducting manner, so that either the gas sucked in through the test gas inlet (12) or the gas sucked in through the reference gas inlet (14) is analyzed by the gas analyzer (16), with the following steps:
a) supplying gas sucked in through the test gas inlet (12) to the gas analyzer (16),
b) determining the test gas concentration in the gas supplied to the gas analyzer (16),
c) switching the switching valve (20),
d) supplying gas sucked in through the reference gas inlet (14) to the gas analyzer (16),
e) analyzing the test gas concentration in the gas supplied to the gas analyzer (16),
f) forming a differential signal from the difference of the test gas concentration determined according to step b) and the test gas concentration determined according to step e),
**characterized in that**
g) changing the spatial orientation of the handpiece,
h) repeating steps a) - f),
i) determining whether the differential signal has changed after step h) compared to the differential signal according to f),
j) deducing, by the change in the differential signal, the relative direction of a gas leak to be localized relative to the orientation of the handpiece.

2. The method according to claim 1, **characterized in that** during step g), the position of the handpiece is not changed.

3. The method according to any one of the preceding claims, **characterized in that** the steps a) - i) are repeated until the differential signal is minimum or maximum.

4. The method according to any one of the preceding claims, **characterized in that** the spatial orientation of the sniffer probe is not changed between performing step a) and performing step d).

5. The method according to any one of the preceding claims, **characterized in that** switching the switching valve (20) according to step c) while performing steps a) - i) is performed with a switching frequency of at least one Hertz and preferably approximately 10 Hz - 100 Hz.

6. The method according to any one of the preceding claims, **characterized in that** the orientation of the handpiece is evaluated as an indication of the relative position of the leak to be localized if the differential signal is maximum or minimum.

7. The method according to any one of the preceding claims, **characterized in that** a leak to be localized is assumed to be disposed on a geometric axis passing through the test gas inlet (12) and through the reference gas inlet (14) if the differential signal is maximum or minimum.

8. The method according to any one of the preceding claims, **characterized in that** a leak to be localized is assumed to be disposed on a geometric axis which is traverse to an axis including the test gas inlet (12) and the reference gas inlet (14) if the differential signal is approximately or equal to zero.

9. The method according to any one of the preceding claims, **characterized in that** by means of a position sensor and/or an acceleration sensor, the position and/or a change in position of the sniffer leak detector is detected and taken into account when determining the position of the leak.

10. The method according to any one of the preceding claims, **characterized in that** the position of the sniffer leak detector (10) is detected and its temporal course is recorded and correlated with the determined differential signal while performing at least one of the steps a) - i).

11. The method according to any one of the preceding claims, **characterized in that** the differential signal and/or its change while performing at least one of the steps a) - i) are indicated to the user of the sniffer leak detector (10).

## Revendications

1. Procédé permettant de déterminer la direction relative d'une fuite de gaz par rapport à un détecteur de fuite par reniflage (10) qui comprend
une pièce à main (44) munie d'une sonde de reniflage avec une entrée de gaz à analyser (12),
une entrée de gaz de référence (14) agencée sur la pièce à main, à distance de l'entrée de gaz à analyser (12) ;
un analyseur de gaz (16) ; et
une vanne de commutation (20),
la vanne de commutation (20) étant conçue pour connecter en alternance l'entrée de gaz à analyser (12) à l'analyseur de gaz (16) et l'entrée de gaz de référence (14) à l'analyseur de gaz (16) de manière à faire circuler le gaz, de sorte que soit le gaz aspiré par l'entrée de gaz à analyser (12), soit le gaz aspiré par l'entrée de gaz de référence (14) est analysé par l'analyseur de gaz (16), comprenant les étapes consistant à :
a) amener du gaz aspiré par l'entrée de gaz de contrôle (12) à l'analyseur de gaz (16) ;
b) déterminer la concentration de gaz de test dans le gaz amené à l'analyseur de gaz (16) ;
c) commuter la vanne de commutation (20),
d) amener le gaz aspiré par l'entrée de gaz de référence (14) à l'analyseur de gaz (16) ;
e) analyser la concentration de gaz de test dans le gaz amené à l'analyseur de gaz (16) ;
f) former un signal de différence à partir de la différence entre la concentration de gaz de test déterminée à l'étape b) et la concentration de gaz de test déterminée à l'étape e) ;
**caractérisé par** les étapes consistant à
g) modifier l'orientation spatiale de la pièce à main ;
h) répéter les étapes a) à f),
i) déterminer si le signal de différence après l'étape h) a changé par rapport au signal de différence selon f) ;
j) déduire la direction relative d'une fuite de gaz à localiser par rapport à l'orientation de la pièce à main en se basant sur la modification du signal de différence.

2. Procédé selon la revendication 1, **caractérisé en ce que** pendant l'étape g), la position de la pièce à main n'est pas modifiée.

3. Procédé selon l'une quelconque des revendications précédentes, **caractérisé en ce que** les étapes a) à i) sont répétées jusqu'à ce que le signal de différence soit minimal ou maximal.

4. Procédé selon l'une quelconque des revendications précédentes, **caractérisé en ce que** l'orientation spatiale de la sonde de reniflage n'est pas modifiée entre l'exécution de l'étape a) et l'exécution de l'étape d).

5. Procédé selon l'une quelconque des revendications précédentes, **caractérisé en ce que** la commutation de la vanne de commutation (20) selon l'étape c) survient pendant l'exécution des étapes a) à i) avec une fréquence de commutation d'au moins un hertz et de préférence d'environ 10 Hz à 100 Hz.

6. Procédé selon l'une quelconque des revendications précédentes, **caractérisé en ce que** l'orientation de la pièce à main est évaluée en tant qu'indication de la position relative de la fuite à localiser lorsque le signal de différence est maximal ou minimal.

7. Procédé selon l'une quelconque des revendications précédentes, **caractérisé en ce qu'**une fuite à localiser est considérée comme étant agencée sur un axe géométrique qui s'étend à travers l'entrée de gaz à analyser (12) et à travers l'entrée de gaz de référence (14) lorsque le signal de différence est maximal ou minimal.

8. Procédé selon l'une quelconque des revendications précédentes, **caractérisé en ce qu'**une fuite à localiser est considérée comme étant agencée sur un axe géométrique qui s'étend transversalement à un axe contenant l'entrée de gaz à analyser (12) et l'entrée de gaz de référence (14) lorsque le signal de différence est proche ou égal à zéro.

9. Procédé selon l'une quelconque des revendications précédentes, **caractérisé en ce qu'**à l'aide d'un capteur de position et/ou d'un capteur d'accélération, la position et/ou une modification de la position du détecteur de fuite par reniflage est détectée et est prise en compte lors de la détermination de la position de la fuite.

10. Procédé selon l'une quelconque des revendications précédentes, **caractérisé en ce que** la position du détecteur de fuite par reniflage (10) est détectée et sa progression chronologique est enregistrée pendant l'exécution d'au moins l'une des étapes a) à i) et est corrélé avec le signal de différence déterminé.

11. Procédé selon l'une quelconque des revendications précédentes, **caractérisé en ce que** le signal de différence et/ou sa modification pendant l'exécution d'au moins l'une des étapes a) à i) sont indiqués à l'utilisateur du détecteur de fuite par reniflage (10).
